# DEMANDE DE BREVET EUROPEEN

(11) **EP 1 005 208 A1**
(43) Date de publication de la demande: **31.05.2000**
(21) Numéro de dépôt: 99420232.3
(22) Date de dépôt: 26.11.1999
(51) Int. Cl.: H04M 1/08

(54) **Poste téléphonique à capteur de raccroché integré**

(30) Priorité: 27.11.1998 FR 9815176
(71) Demandeur: Ascom Horlogerie Photographie Francaise, 74130 Bonneville (FR)
(72) Inventeur: Bruyere, Marcel, 74130 Ayze (FR); Deshayes, Jean-Christophe, 74800 Saint Pierre en Faucigny (FR); Richard, Patrice, 74800 Saint Pierre en Faucigny (FR); Rougeau, Philippe, 74300 Cluses (FR)
(74) Mandataire: Poncet, Jean-François

(57) **Abrégé**

Selon l'invention, la pédale de raccroché (8) logée dans le socle (1) pivote en rotation autour d'un axe de pivotement (9) fixe et comprend une zone d'appui (10) dépassant hors du socle (1) et recevant le combiné (2). Une zone intermédiaire (13) de la pédale de raccroché (8) vient en appui sur une seconde zone de déformation élastique préférentielle (14) d'une membrane élastiquement déformable (6) posée sur le circuit imprimé (3) et qui la rappelle en position de décroché. La zone opposée (12) de pédale de raccroché (8) vient en appui sur une première zone de déformation élastique préférentielle (7) de la membrane élastiquement déformable (6). Des pastilles conductrices (15, 17) associées aux zones de déformation élastique préférentielles (7, 14) de membrane élastiquement déformable (6) viennent en appui sur des zones de contact (5, 18) du circuit imprimé (3) pour réaliser les capteurs de décroché et de raccroché. La structure du poste téléphonique est ainsi simplifiée, et présente une grande fiabilité de fonctionnement.

## Description

La présente invention concerne les postes téléphoniques comprenant un socle et un combiné, dans lesquels le socle contient un circuit imprimé associé à une membrane élastiquement déformable ayant au moins une zone de déformation élastique préférentielle, et contenant une pédale de raccroché montée oscillante autour d'un axe de pivotement fixe et sollicitée en pivotement par le combiné lorsqu'il vient porter contre une zone d'appui de la pédale en position de raccroché, un commutateur électrique générant un signal électrique de raccroché utilisé par le circuit électronique du poste pour couper la connexion à la ligne téléphonique.

Dans les structures traditionnelles de poste téléphonique, telles que décrites notamment dans le document US 3,824,353 A, la pédale de raccroché, formée d'un levier mécanique articulé autour d'un axe transversal, comprend une extrémité qui dépasse hors du socle et sur laquelle vient appuyer le combiné lorsqu'il est en position de raccroché. La pédale de raccroché est sollicitée par un ressort métallique qui, en l'absence de combiné, la ramène en position de décroché avec sa partie dépassante faisant saillie hors du socle. Un commutateur monostable, généralement monté sur un circuit imprimé du socle, est sollicité par la pédale de raccroché, pour produire un signal électrique donnant l'information de présence ou d'absence du combiné, c'est-à-dire l'information de raccroché ou de décroché.

Jusqu'à une date assez récente, le commutateur était un composant autonome rapporté à un ou deux contacts repos-travail monostable, avec un ressort de rappel intégré pour le ramener en position de repos lorsque le combiné n'est pas en appui sur la pédale de raccroché.

Plus récemment, comme illustré dans les documents WO 85/00715 A ou US 4,709,389 A, on a proposé de remplacer le commutateur autonome rapporté par une zone de déformation élastique préférentielle d'une membrane élastiquement déformable, portant une pastille conductrice en regard de conducteurs prévus sur un circuit imprimé, la membrane élastiquement déformable étant sollicitée par une extrémité de la pédale de raccroché opposée à sa partie dépassante par rapport à l'axe de pivotement. Dans une telle structure, on prévoit encore un ressort métallique repoussant la pédale en position décrochée en l'absence de combiné. En l'absence de combiné, en position décrochée, le ressort sollicite la pédale vers la position décrochée, et produit l'effort pour actionner la membrane élastiquement déformable et établir le contact de la pastille sur les conducteurs du circuit imprimé. Le signal produit par ce type de commutateur est envoyé à un circuit électronique remplissant la fonction d'interrupteur de ligne.

Dans une telle structure, il reste nécessaire de prévoir un ressort métallique distinct sollicitant la pédale vers la position décrochée, le ressort ayant une force suffisante pour assurer le fonctionnement mécanique et le contact électrique.

Un premier problème proposé par la présente invention est d'éviter le recours à un ressort métallique distinct pour solliciter la pédale vers sa position décrochée. L'idée qui est à la base de l'invention est d'utiliser l'élasticité de la membrane associée au circuit imprimé pour repousser la pédale vers sa position décrochée. Mais la difficulté est alors de réaliser une course suffisante en rotation de la pédale de raccroché, afin que la partie dépassante soit suffisamment apparente hors du socle en position décrochée. Une autre difficulté est de réaliser une partie élastiquement déformable de membrane qui puisse être aisément reproductible sans dispersion notable de la force de rappel produite, dans une production en série.

Ces difficultés ont pu jusqu'à présent dissuader l'homme du métier de tenter de remplacer un ressort métallique de rappel par une partie déformable de membrane élastique.

Un autre objet de l'invention est de concevoir une telle structure de poste téléphonique qui présente un très faible courant de fuite en position raccrochée, afin d'assurer une grande résistance d'isolement et d'éviter toute consommation d'énergie sur la ligne lorsque le poste est raccroché.

Un autre problème que se propose de résoudre l'invention dans un mode de réalisation particulier est de réduire le coût de production d'un tel poste téléphonique, non seulement en évitant d'avoir recours à un ressort métallique distinct, mais également en réduisant le coût de production du circuit électronique associé. Notamment, selon l'invention, on cherche à réaliser de manière économique deux commutateurs électriques isolés l'un de l'autre et permettant de les connecter d'une part au circuit d'interruption de ligne et d'autre part au microcontrôleur pilotant le poste.

Pour atteindre ces objets ainsi que d'autres, l'invention prévoit un poste téléphonique, comprenant un socle et un combiné, le socle contenant un circuit imprimé associé à une membrane élastiquement déformable ayant au moins une zone de déformation élastique préférentielle, le socle contenant une pédale de raccroché montée oscillante autour d'un axe de pivotement fixe selon une zone d'articulation entre une zone d'appui dépassant hors du socle et une zone opposée, le combiné étant adapté pour venir porter sur la zone d'appui de la pédale en position de raccroché et pour la repousser vers l'intérieur du socle en faisant pivoter la pédale de raccroché à l'encontre de moyens élastiques de rappel, avec un premier commutateur électrique sollicité par la pédale de raccroché et générant un signal électrique de raccroché lorsque la pédale de raccroché est repoussée vers l'intérieur du socle. Les moyens élastiques de rappel comprennent une seconde zone de déformation élastique préférentielle de la membrane élastiquement déformable, qui vient porter contre la pédale de raccroché. La seconde zone de déformation élastique préférentielle de membrane élastiquement déformable vient porter contre une zone intermédiaire de pédale entre l'axe de pivotement et la zone d'appui, de sorte que la force de rappel exercée par la membrane élastiquement déformable sur la pédale de raccroché est supérieure à la force d'appui du combiné sur la pédale de raccroché.

Grâce à la position particulière de la seconde zone de déformation élastique préférentielle de membrane élastiquement déformable, il est possible d'utiliser une seconde zone de déformation élastique préférentielle de membrane élastiquement déformable plus épaisse, dont la course élastique soit réduite. De la sorte, la seconde zone préférentielle de déformation de membrane élastiquement déformable est plus simple à réaliser, et les efforts mécaniques qu'elle produit sont mieux reproductibles dans une production en série.

Dans un mode de réalisation avantageux, le premier commutateur électrique est logé sur le socle en regard de la zone opposée de pédale de raccroché, à l'état ouvert lorsque la pédale de raccroché est repoussée par le combiné et à l'état fermé lorsque la pédale de raccroché est repoussée par la membrane élastiquement déformable en l'absence de combiné.

De préférence, le premier commutateur électrique est constitué d'une première zone de déformation élastique préférentielle de la membrane élastiquement déformable, au contact de la zone opposée de la pédale de raccroché, et portant au moins une première pastille conductrice en regard d'une première zone de contact à conducteurs électriques du circuit imprimé.

Selon un mode de réalisation préféré, la seconde zone de déformation élastique préférentielle porte au moins une seconde pastille conductrice au regard d'une seconde zone de contact du circuit imprimé, formant le second commutateur électrique. On dispose ainsi de deux commutateurs électriques isolés l'un de l'autre, permettant de produire deux signaux électriques envoyés respectivement à un circuit interrupteur de ligne et à un microcontrôleur. La structure de circuit électronique se trouve ainsi simplifiée. Le second commutateur électrique fournit une information de décroché au microcontrôleur placé sur le circuit imprimé, tandis que le premier commutateur électrique fournit le signal d'alimentation électrique par la ligne téléphonique.

Selon un mode de réalisation avantageux, on profite de la structure mécanique des zones de déformation élastique préférentielles de membrane pour simplifier encore le circuit électronique et éviter la production d'informations erronées de l'état du poste téléphonique. On cherche principalement à éviter de donner une information de raccroché dans une situation dans laquelle la ligne se trouve encore connectée. Pour cela, les zones de déformation élastique préférentielles de membrane élastiquement déformable sont conçues de telle façon que le second commutateur électrique est encore ouvert lorsque le premier commutateur électrique s'ouvre par déplacement de la pédale de raccroché vers la position de raccroché, et le second commutateur électrique s'ouvre avant la fermeture du premier commutateur électrique par déplacement de la pédale vers la position de décroché.

Selon une réalisation avantageuse, la seconde zone de déformation élastique préférentielle de membrane élastiquement déformable a une forme de cloque à partie centrale déportée axialement à l'écart du plan général de membrane et reliée au corps de membrane élastiquement déformable par un raccordement périphérique conique plus mince, la partie centrale étant bordée d'une couronne extérieure périphérique d'appui avec un intervalle annulaire d'épaisseur réduite, de sorte que la courbe de force d'appui en fonction du déplacement de la partie centrale a une allure en S, avec une première zone croissante jusqu'à un maximum relatif, une seconde zone décroissante, et une troisième zone croissante autorisant une course élastique supplémentaire pour assurer une sécurité de fonctionnement.

Le fonctionnement de la commutation se trouve facilité lorsque le maximum relatif correspond à un couple de pivotement de pédale de raccroché inférieur au couple de pivotement produit par l'appui du combiné et supérieur au couple de pivotement produit par la première zone de déformation élastique préférentielle.

D'autres objets, caractéristiques et avantages de la présente invention ressortiront de la description suivante de modes de réalisation particuliers, faite en relation avec les figures jointes, parmi lesquelles:
- la figure 1 est une vue de côté schématique en coupe d'une structure de poste téléphonique selon un mode de réalisation de la présente invention, en position décrochée ;
- la figure 2 est une vue de côté en coupe du poste téléphonique de la figure 1 en position raccrochée ;
- la figure 3 est un schéma de côté illustrant les forces appliquées sur la pédale de raccroché d'un poste de la figure 1 ;
- la figure 4 est un diagramme d'évolution des forces générées par les moyens élastiques de rappel de la pédale vers la position décrochée, selon un mode de réalisation avantageux de la présente invention ;
- la figure 5 est un diagramme des forces générées sur la pédale de raccroché par le premier commutateur électrique dans le mode de réalisation dans lequel ce premier commutateur électrique est constitué d'une portion élastiquement déformable de la membrane associée au circuit imprimé ;
- la figure 6 illustre, en vue de côté en coupe, une structure de zone de déformation élastique de membrane pour la constitution du premier commutateur électrique selon un mode de réalisation de l'invention ;
- la figure 7 est une vue de côté en coupe d'une structure de moyen élastique de rappel de la pédale de raccroché selon un mode de réalisation de la présente invention ;
- la figure 8 représente schématiquement le circuit électrique du poste téléphonique selon un mode de réalisation de l'invention ; et
- la figure 9 représente schématiquement une variante du circuit électrique de la figure 8.

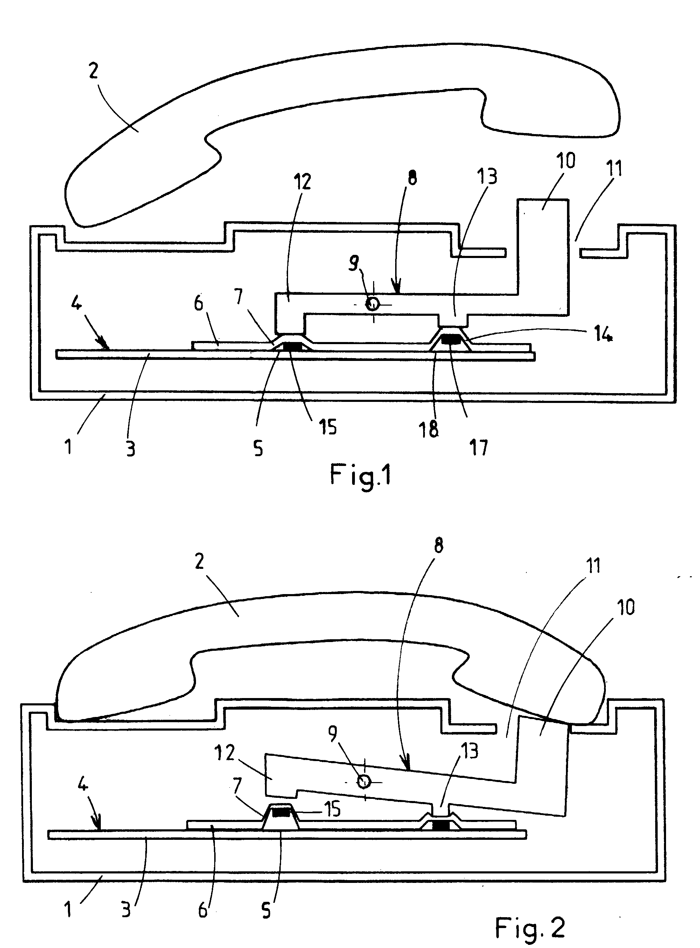

On considérera tout d'abord la structure générale du poste téléphonique telle qu'illustrée sur les figures 1 et 2. Le poste téléphonique comprend un socle 1 et un combiné 2. Le socle 1 est un boîtier fermé dans lequel est incorporé un circuit imprimé 3 sur lequel sont disposés les composants électroniques du circuit électronique du poste, non représentés sur les figures. Le circuit imprimé 3 contient des pistes conductrices sur sa face supérieure 4, reliant les composants électroniques et définissant au moins une première zone de contact 5 pour la réalisation d'un premier commutateur électrique.

Le circuit imprimé 3 est associé à une membrane élastiquement déformable 6, généralement plane et reposant sur la face supérieure 4 du circuit imprimé 3, et comportant une première zone de déformation élastique préférentielle 7 formant une excroissance s'écartant de la face supérieure 4 du circuit imprimé 3, et susceptible d'être écrasée par un élément extérieur pour venir en appui sur la face supérieure 4 du circuit imprimé 3.

Le socle 1 contient en outre une pédale de raccroché 8, montée oscillante autour d'un axe de pivotement 9 fixe du socle 1 selon une zone d'articulation située entre une zone d'appui 10 traversant une ouverture 11 du socle 1 pour dépasser au-dessus du socle 1 et une zone opposée 12.

Le combiné 2 est adapté pour venir porter sur la zone d'appui 10 de la pédale de raccroché 8 lorsqu'il est en position de raccroché telle qu'illustrée sur la figure 2. Dans cette position de raccroché de la figure 2, le combiné 2 repousse la zone d'appui 10 vers l'intérieur du socle 1, en faisant pivoter la pédale de raccroché 8 à l'encontre de moyens élastiques de rappel, qui seront décrits ci-après. Egalement, un premier commutateur électrique, qui sera décrit ci-après, génère un signal électrique de raccroché lorsque la pédale de raccroché 8 est repoussée vers l'intérieur du socle 1.

La pédale de raccroché 8 est disposée au-dessus de la membrane élastiquement déformable 6 elle-même disposée au-dessus du circuit imprimé 3.

Dans le mode de réalisation illustré sur les figures, le premier commutateur électrique est logé dans le socle 1 en regard de la zone opposée 12 de pédale de raccroché 8. Le premier commutateur électrique est à l'état ouvert lorsque la pédale de raccroché 8 est repoussée par le combiné 2, et est à l'état fermé lorsque la pédale de raccroché 8 est repoussée par les moyens élastiques de rappel en l'absence du combiné 2. Le premier commutateur électrique est constitué de la première zone de déformation élastique préférentielle 7 de la membrane élastiquement déformable 6, située au droit de la première zone de contact 5 du circuit imprimé 3 et au droit de la zone opposée 12 de la pédale de raccroché 8. La première zone de déformation élastique préférentielle 7 de membrane élastiquement déformable 6 porte au moins une première pastille conductrice 15, placée sur sa face inférieure et située ainsi au regard des conducteurs du circuit imprimé 3 dans la première zone de contact 5. En position raccrochée illustrée sur la figure 2, la première pastille conductrice 15 est rappelée à l'écart de la première zone de contact 5 par l'élasticité intrinsèque de la première zone de déformation élastique préférentielle 7 de membrane élastiquement déformable 6. En position décrochée, illustrée sur la figure 1, la pédale de raccroché 8 est sollicitée en pivotement par les moyens élastiques de rappel, de telle sorte que la zone opposée 12 de la pédale de raccroché 8 vient en appui sur la première zone de déformation élastique préférentielle 7 de la membrane élastiquement déformable 6 pour appliquer la première pastille conductrice 15 contre la première zone de contact 5 du circuit imprimé 3 et établir ainsi un contact électrique donnant l'information du décroché.

Selon l'invention, les moyens élastiques de rappel de la pédale de raccroché 8 comprennent une seconde zone de déformation élastique préférentielle 14 de la membrane élastiquement déformable 6, qui porte contre la pédale de raccroché 8, dans une zone intermédiaire 13 de la pédale de raccroché 8 entre la zone d'articulation ou axe de pivotement 9 et la zone d'appui 10. Par cette disposition, une force d'appui donnée Fc du combiné 2 sur la zone d'appui 10 de la pédale de raccroché 8 peut vaincre une force de rappel Fr supérieure de la seconde zone de déformation élastique préférentielle 14 de membrane élastiquement déformable 6 sur la zone intermédiaire 13, pour amener la pédale de raccroché 8 en position de raccroché illustrée sur la figure 2.

La seconde zone de déformation élastique préférentielle 14 produit, sur la pédale de raccroché 8, un couple de rotation nettement supérieur et opposé au couple de rotation produit par la première zone de déformation élastique préférentielle 7.

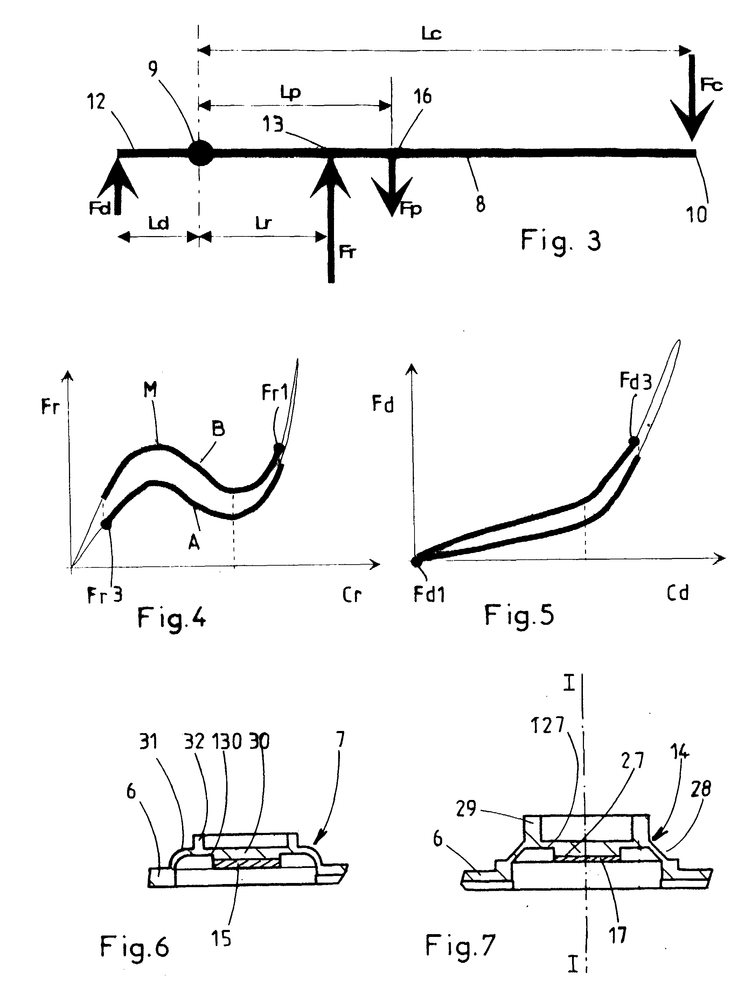

Les figures 3 à 5 illustrent les conditions à réaliser pour un fonctionnement correct du poste téléphonique. Sur la figure 3, on a illustré schématiquement la pédale de raccroché 8, en rotation autour de son axe de pivotement 9, avec la force Fc appliquée par le combiné 2 sur la zone d'appui 10, avec la force Fd appliquée sur la zone opposée 12 par la première zone de déformation élastique préférentielle 7 de membrane élastiquement déformable 6 (figure 1), avec la force Fr appliquée sur la pédale de raccroché 8 dans sa zone intermédiaire 13 par la seconde zone de déformation élastique préférentielle 14 de membrane élastiquement déformable 6 (figure 1), et avec le poids Fp de la pédale de raccroché 8 elle-même qui s'applique en son centre de gravité 16.

On distingue les distances Lc entre l'axe de pivotement 9 et la zone d'appui 10, la distance Ld entre l'axe de pivotement 9 et la zone opposée 12, la distance Lr entre l'axe de pivotement 9 et la zone intermédiaire 13, et la distance Lp entre l'axe de pivotement 9 et le centre de gravité 16 de la pédale de raccroché 8.

En général, comme la pédale de raccroché 8 ne subit pas d'efforts importants, sa structure peut être légère, et on peut négliger l'effet de son poids Fp appliqué au centre de gravité 16.

La figure 4 illustre le diagramme de variation de la force de rappel Fr développée par la seconde zone de déformation élastique préférentielle 14 de membrane élastiquement déformable 6, en fonction de la course de rappel. On supposera que la position initiale du poste est la position raccrochée illustrée sur la figure 2. Sur la figure 4, on se trouve au point indiqué par l'expression Fr1.

Pendant une action de décroché, passant de la position de la figure 2 vers la position de la figure 1, le combiné 2 est soulevé, la course de raccroché Cr diminue progressivement et l'on suit la nappe inférieure A de la courbe du diagramme. La force de rappel diminue progressivement, puis augmente et diminue jusqu'au point indiqué Fr3, en position décrochée.

Ensuite, pendant une opération de raccroché, le combiné 2 vient en appui sur la zone d'appui 10 de la pédale de raccroché 8, et l'on suit le diagramme de la figure 4 sur la nappe supérieure B de la courbe. La course de raccroché Cr augmente progressivement, la force de rappel Fr augmente selon une première zone croissante jusqu'à un maximum relatif M, puis décroît jusqu'à un minimum pour croître à nouveau jusqu'au point Fr1 lorsqu'on arrive en position raccrochée.

Dans le diagramme illustré sur la figure 5, on a représenté la force Fd appliquée par la première zone de déformation élastique préférentielle 7 de membrane élastiquement déformable 6 sur la zone opposée 12 de la pédale de raccroché 8. La courbe de variation de la force Fd est monotone et croissante en fonction de la course de décroché Cd. La force est croissante depuis un minimum Fd1 jusqu'à un maximum Fd3.

Pour qu'une opération de raccroché s'effectue correctement, on choisit une force de rappel Fr1 inférieure à la force Fc appliquée par le combiné 2 sur la zone d'appui 10 multipliée par le rapport entre les longueurs Lc et Lr.

Pour que l'action de décroché soit correctement détectée, il faut que la pédale de raccroché 8 pivote effectivement autour de son axe de pivotement 9 sous l'action des moyens élastiques de rappel. Pour cela, on choisit une force Fd générée par la première zone de déformation élastique préférentielle 7 qui soit nettement inférieure au produit de la force de rappel Fr générée par la seconde zone de déformation élastique préférentielle 14 et du rapport des longueurs Lr et Ld.

On voit, sur les figures 4 et 5, un mode de choix avantageux des forces respectives en présence, au cours des étapes successives du fonctionnement.

Dans le mode de réalisation illustré sur les figures 1 et 2, la seconde zone de déformation élastique préférentielle 14 porte également au moins une seconde pastille conductrice 17 sur sa face inférieure, au regard d'une seconde zone de contact 18 du circuit imprimé 3, formant un second commutateur électrique isolé du premier commutateur électrique constitué par la première zone de déformation élastique préférentielle 7 de membrane élastiquement déformable 6.

On peut avantageusement utiliser le signal produit par le premier commutateur électrique 5, 7, 15 pour piloter un circuit d'interrupteur de ligne. Simultanément, on utilise le signal fourni par le second commutateur électrique 14, 17, 18 pour piloter un microcontrôleur.

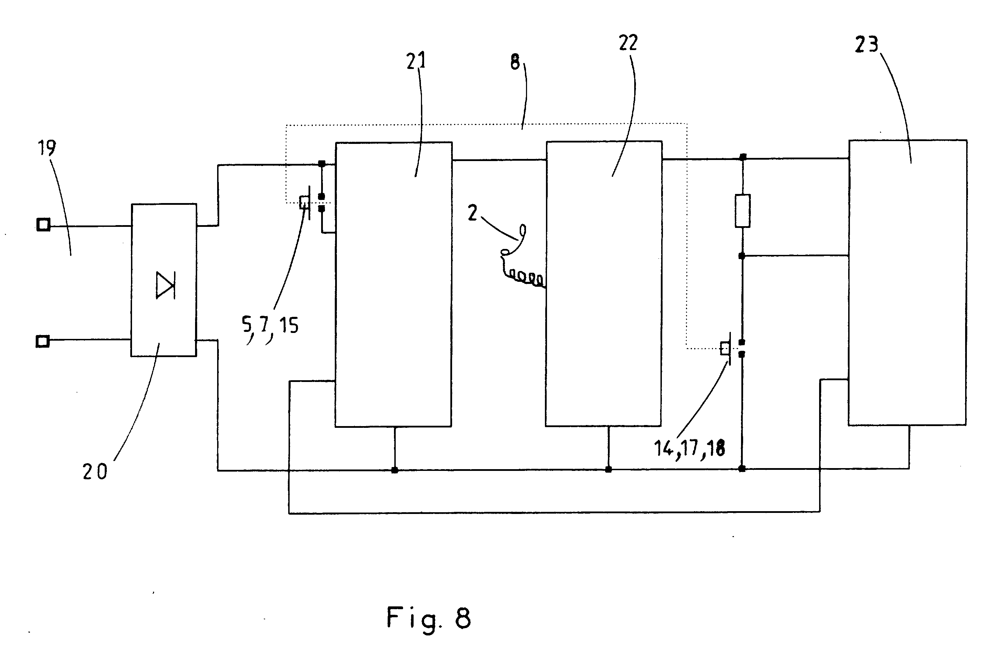

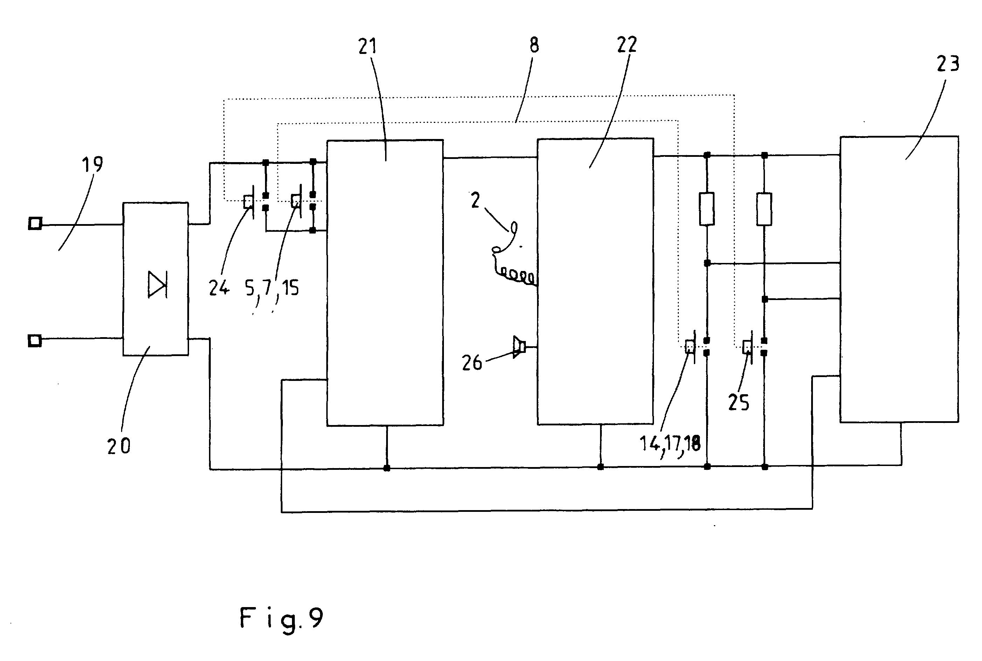

On se référera à cet effet aux figures 8 et 9 illustrant un schéma électrique de poste téléphonique selon un mode de réalisation de l'invention.

Sur la figure 8, on distingue la ligne téléphonique 19 avec un circuit d'interface 20 traditionnel, un circuit interrupteur électronique de ligne 21, un circuit de transmission 22 et un microcontrôleur 23. Le combiné 2 est connecté au circuit de transmission 22. Le premier commutateur électrique constitué par la première zone de déformation électrique préférentielle 7 et la première pastille conductrice 15 au regard de la première zone de contact 5 est connecté pour piloter le circuit interrupteur électronique de ligne 21. En position raccrochée, ce premier commutateur électrique est ouvert, évitant la consommation d'énergie. Le second commutateur électrique, formé par la seconde zone de déformation élastique préférentielle 14 et la seconde pastille conductrice 17 en regard de la seconde zone de contact 18, est connecté pour piloter le microcontrôleur 23 et lui donner une information de décroché ou de raccroché. Les deux commutateurs électriques sont liés l'un à l'autre mécaniquement par la pédale de raccroché 8, mais sont isolés électriquement, ce qui simplifie la réalisation des circuits électroniques.

Sur la figure 9, on a illustré un second mode de réalisation du circuit électronique, reprenant les mêmes éléments que le mode de réalisation de la figure 8, en ajoutant deux commutateurs isolés 24 et 25 actionnés par une pédale de prise de ligne sans décrocher, dont l'un est connecté électriquement en parallèle sur le premier commutateur électrique 5, 7, 15 d'une part et l'autre est connecté au microcontrôleur 23 pour lui donner une information de l'action de la prise de ligne sans décrocher, d'autre part. Dans ce cas, le circuit de transmission 22 est connecté non seulement au combiné 2 mais également à un transducteur électroacoustique 26.

Les courses de contact des deux commutateurs électriques sont choisies de telle façon que le second commutateur électrique 14, 17, 18 est encore ouvert lorsque le premier commutateur électrique 5, 7, 15 s'ouvre par déplacement de la pédale 8 vers la position de raccroché, et le second commutateur électrique 14, 17, 18 s'ouvre avant la fermeture du premier commutateur électrique 5, 7, 15 par déplacement de la pédale 8 vers la position de décroché.

On a illustré sur les figures 6 et 7 un mode de réalisation des zones de déformation élastique préférentielle de la membrane élastiquement déformable 6.

Sur la figure 7, la seconde zone de déformation élastique préférentielle 14 de membrane a une forme de cloque à partie centrale 27 déportée à l'écart du plan de la membrane élastiquement déformable 6 et reliée au corps de membrane élastiquement déformable 6 par un raccordement périphérique conique 28 plus mince. La partie centrale 27 est bordée d'une couronne extérieure 29 périphérique d'appui dont le diamètre est supérieur à celui de la seconde pastille conductrice 17 pour laisser un intervalle annulaire 127 d'épaisseur réduite entre la couronne extérieure 29 périphérique d'appui et la seconde pastille conductrice. L'intervalle annulaire 127 d'épaisseur réduite autorise une course élastique supplémentaire de la couronne extérieure 29 périphérique d'appui au cours de laquelle la seconde pastille conductrice est tenue en appui sur la zone de contact 18 correspondante. On évite ainsi les risques de microcoupures en cas de choc, et on améliore la sécurité de fonctionnement. La structure peut présenter une symétrie de révolution autour de l'axe I-I. De la sorte, la courbe de force d'appui Fr en fonction du déplacement Cr de la partie centrale 27 a une allure en S telle qu'illustrée sur le diagramme de la figure 4, avec une première zone croissante jusqu'à un maximum relatif, une seconde zone décroissante et une troisième zone croissante. De préférence, le maximum relatif M correspond à un couple de pivotement de pédale de raccroché 8 inférieur au couple de pivotement produit par l'appui du combiné 2 et supérieur au couple de pivotement produit par la première zone de déformation élastique préférentielle 7.

Dans le mode de réalisation illustré sur la figure 6, la première zone de déformation élastique préférentielle 7 présente également une forme de cloque à partie centrale 30 déportée à l'écart du plan général de la membrane élastiquement déformable 6, avec une zone de raccordement périphérique 31 torique, produisant une courbe de force Fd en fonction du déplacement Cd qui présente l'allure illustrée sur le diagramme de la figure 5. On peut avantageusement prévoir une couronne extérieure 32 périphérique d'appui et un intervalle annulaire 130 d'épaisseur réduite pour éviter les risques de microcoupures en cas de choc.

En fonctionnement, la pédale de raccroché 8 vient en appui contre les couronnes extérieures périphériques 32 et 29 respectivement par sa zone opposée 12 et sa zone intermédiaire 13.

Le mode de réalisation dans lequel la seconde zone de déformation élastique préférentielle 14 de membrane élastiquement déformable 6 est également pourvue d'une seconde pastille conductrice 17 pour réaliser le second commutateur électrique est également rendu possible grâce à la combinaison avec le levier formé par la pédale de raccroché 8. En effet, le second commutateur électrique 14, 17, 18 est destiné à être la plupart du temps maintenu en position de contact, la seconde zone de déformation élastique préférentielle 14 étant maintenue écrasée par la pédale de raccroché 8 sollicitée par le poids du combiné 2, car les postes téléphoniques restent en position raccrochée pendant de longues périodes de temps. Dans une telle position, la seconde pastille conductrice 17 vient en contact de la seconde surface de contact 18, et un contact de longue durée produit généralement le collage de la seconde pastille conductrice 17 sur la seconde zone de contact 18. Pour décoller la seconde pastille conductrice 17, il faut une force élastique suffisante de la seconde zone de déformation élastique préférentielle 14, et il faut donc une cloque de raideur relativement importante. Cette raideur importante est rendue possible par la position particulière de la zone intermédiaire 13 sur la pédale de raccroché 8, qui permet de rendre cette raideur importante compatible avec le poids réduit du combiné 2 appliqué sur la zone d'appui 10 de la pédale de raccroché 8. Par exemple, il a été possible selon l'invention de choisir une cloque dont la force de rappel Fr est de l'ordre de 3 Newtons, alors que la force d'appui Fc du combiné est de l'ordre de 0,7 Newton. Autrement dit, la pédale de raccroché 8 rend possible la réalisation du second commutateur électrique 14, 17, 18 sans risque de collage de la seconde pastille conductrice 17 sur la seconde zone de contact 18.

La présente invention n'est pas limitée aux modes de réalisation qui ont été explicitement décrits, mais elle en inclut les diverses variantes et généralisations contenues dans le domaine des revendications ci-après.

## Revendications

1. Poste téléphonique, comprenant un socle (1) et un combiné (2), le socle (1) contenant un circuit imprimé (3) associé à une membrane élastiquement déformable (6) ayant au moins une zone de déformation élastique préférentielle, le socle (1) contenant une pédale de raccroché (8) montée oscillante autour d'un axe de pivotement (9) fixe selon une zone d'articulation entre une zone d'appui (10) dépassant hors du socle (1) et une zone opposée (12), le combiné (2) étant adapté pour venir porter sur la zone d'appui (10) de la pédale (8) en position de raccroché et pour la repousser vers l'intérieur du socle (1) en faisant pivoter la pédale de raccroché (8) à l'encontre de moyens élastiques de rappel, avec un premier commutateur électrique (5, 7, 15) sollicité par la pédale de raccroché (8) et générant un signal électrique de raccroché lorsque la pédale de raccroché (8) est repoussée vers l'intérieur du socle (1), caractérisé en ce que :
- les moyens élastiques de rappel comprennent une seconde zone de déformation élastique préférentielle (14) de la membrane élastiquement déformable (6), qui vient porter contre la pédale de raccroché (8),
- la seconde zone de déformation élastique préférentielle (14) de membrane élastiquement déformable (6) vient porter contre une zone intermédiaire (13) de pédale entre l'axe de pivotement (9) et la zone d'appui (10), de sorte que la force de rappel (Fr) exercée par la membrane élastiquement déformable (6) sur la pédale de raccroché (8) est supérieure à la force d'appui (Fc) du combiné (2) sur la pédale de raccroché (8).

2. Poste téléphonique selon la revendication 1, caractérisé en ce que le premier commutateur électrique (5, 7, 15) est logé sur le socle (1) en regard de la zone opposée (12) de pédale de raccroché (8), à l'état ouvert lorsque la pédale de raccroché (8) est repoussée par le combiné (2) et à l'état fermé lorsque la pédale de raccroché (8) est repoussée par la membrane élastiquement déformable (6) en l'absence de combiné (2).

3. Poste téléphonique selon la revendication 2, caractérisé en ce que le premier commutateur électrique (5, 7, 15) est constitué d'une première zone de déformation élastique préférentielle (7) de la membrane élastiquement déformable (6), au contact de la zone opposée (12) de la pédale de raccroché (8), et portant au moins une première pastille conductrice (15) en regard d'une première zone de contact (5) à conducteurs électriques du circuit imprimé (3).

4. Poste téléphonique selon la revendication 3, caractérisée en ce que la seconde zone de déformation élastique préférentielle (14) produit sur la pédale de raccroché (8) un couple de rotation nettement supérieur et opposé au couple de rotation produit par la première zone de déformation élastique préférentielle (7).

5. Poste téléphonique selon l'une quelconque des revendications 1 à 4, caractérisé en ce qu'il comprend un second commutateur électrique (14, 17, 18) actionné par la pédale de raccroché (8) et fournissant une information de décroché à un microcontrôleur (23) placé sur le circuit imprimé (3), tandis que le premier commutateur électrique (5, 7, 15) fournit le signal d'alimentation électrique par la ligne téléphonique (19).

6. Poste téléphonique selon l'une quelconque des revendications 2 à 5, caractérisé en ce que la seconde zone de déformation élastique préférentielle (14) porte au moins une seconde pastille conductrice (17) au regard d'une seconde zone de contact (18) du circuit imprimé (3), formant le second commutateur électrique.

7. Poste téléphonique selon l'une des revendications 5 ou 6, caractérisé en ce que le second commutateur électrique (14, 17, 18) est encore ouvert lorsque le premier commutateur électrique (5, 7, 15) s'ouvre par déplacement de la pédale de raccroché (8) vers la position de raccroché, et le second commutateur électrique (14, 17, 18) s'ouvre avant la fermeture du premier commutateur électrique (5, 7, 15) par déplacement de la pédale (8) vers la position de décroché.

8. Poste téléphonique selon l'une quelconque des revendications 1 à 7, caractérisé en ce que la seconde zone de déformation élastique préférentielle (14) de membrane élastiquement déformable a une forme de cloque à partie centrale (27) déportée axialement à l'écart du plan général de membrane et reliée au corps de membrane élastiquement déformable (6) par un raccordement périphérique conique (28) plus mince, la partie centrale (27) étant bordée d'une couronne extérieure (29) périphérique d'appui avec un intervalle annulaire (127) d'épaisseur réduite, de sorte que la courbe de force d'appui en fonction du déplacement de la partie centrale (27) a une allure en S, avec une première zone croissante jusqu'à un maximum relatif (M), une seconde zone décroissante, et une troisième zone croissante.

9. Poste téléphonique selon la revendication 8, caractérisé en ce que le maximum relatif (M) correspond à un couple de pivotement de pédale de raccroché (8) inférieur au couple de pivotement produit par l'appui du combiné (2) et supérieur au couple de pivotement produit par la première zone de déformation élastique préférentielle (7).
